# EUROPÄISCHE PATENTSCHRIFT

(11) **EP 3 309 506 B1**
(45) Veröffentlichungstag und Bekanntmachung des Hinweises auf die Patenterteilung: **29.12.2021**
(21) Anmeldenummer: 17195621.2
(22) Anmeldetag: 10.10.2017
(51) Int. Cl.: G01B 11/24, G01B 11/25, G06T 7/593, G01N 21/956

(54) **VORRICHTUNG UND VERFAHREN ZUR RÄUMLICHEN ERFASSUNG DER OBERFLÄCHE EINES OBJEKTES**
DEVICE AND METHOD FOR THE SPATIAL ACQUISITION OF THE SURFACE OF AN OBJECT
DISPOSITIF ET PROCÉDÉ D'ACQUISITION SPATIALE DE LA SURFACE D'UN OBJET

(30) Priorität: 12.10.2016 DE 102016219861
(43) Veröffentlichungstag der Anmeldung: 18.04.2018
(73) Patentinhaber: Robert Bosch GmbH, 70442 Stuttgart (DE)
(72) Erfinder: Schumacher, Andreas, 70794 Filderstadt (DE); Ding, Rui, 71272 Renningen (DE); Seiffert, Thomas, 70839 Gerlingen (DE)

(56) Entgegenhaltungen:
- DE-A1-102010 051 602
- DE-A1-102014 205 701
- DE-T5-112011 104 727
- US-A- 6 028 672
- UKIDA H ET AL: "3D shape measurements using stereo image scanner with three color light sources", INSTRUMENTATION AND MEASUREMENT TECHNOLOGY CONFERENCE, 2004. IMTC 04. PROCEEDINGS OF THE 21ST IEEE COMO, ITALY 18-20 MAY 2004, PISCATAWAY, NJ, USA,IEEE, US, 18. Mai 2004 (2004-05-18), Seiten 639-644Vol.1, XP010736209, DOI: 10.1109/IMTC.2004.1351129 ISBN: 978-0-7803-8248-0
- JORDAN III J R ET AL: "USING CHROMATIC INFORMATION IN DENSE STEREO CORRESPONDENCE", PATTERN RECOGNITION, ELSEVIER, GB, Bd. 25, Nr. 4, April 1992 (1992-04), Seiten 367-383, XP000272491, ISSN: 0031-3203, DOI: 10.1016/0031-3203(92)90086-X
- Michael Bleyer ET AL: "Evaluation of different methods for using colour information in global stereo matching approaches", The International Archives of the Photogrammetry, Remote Sensing and Spatial Information Sciences, 2008, Seiten 63-68, XP055450382, Beijing DOI: 10.1109/TPAMI.2010.136 Gefunden im Internet: URL:http://www.isprs.org/proceedings/xxxvi i/congress/3_pdf/10.pdf [gefunden am 2018-02-12]

## Beschreibung

### Stand der Technik

Die Erfindung betrifft eine Vorrichtung zur räumlichen Erfassung der Oberfläche eines Objektes mittels Stereo-Bildaufnahmen, mit zumindest einer Farbkamera, welche auf einen Aufnahmebereich zur Anordnung des Objektes ausgerichtet ist, wobei die zumindest eine Farbkamera die Aufnahme von zumindest zwei Bildern des Objektes unter einem Triangulationswinkel aus verschiedenen Aufnahmerichtungen ermöglicht.

Die Erfindung betrifft weiterhin ein Verfahren zur räumlichen Erfassung der Oberfläche eines Objektes mittels Stereo-Bildaufnahmen, wobei zumindest zwei Bilder des Objektes mittels zumindest einer Farbkamera aus verschiedenen Aufnahmerichtungen erstellt werden, wobei gleiche Orte auf der Oberfläche des Objektes in den Bilder als einander zugeordnete Korrespondenzpunkte ermittelt werden und wobei aus der Position der Korrespondenzpunkte auf den Bildern und dem Winkel zwischen den Aufnahmerichtungen der Bilder die räumliche Position des jeweiligen Ortes auf der Oberfläche ermittelt wird.

Die dreidimensionale Erfassung der Oberfläche eines Objektes mittels Stereo-Bildaufnahmen ist bekannt. Dazu werden unter einem Triangulationswinkel zumindest zwei Aufnahmen von der Oberfläche gemacht. Nach einer vorangegangenen Kalibrierung ist es möglich, über diese Ansichten die dreidimensionale Form des Objektes zu bestimmen. Solche Stereo-Bildaufnahmen können auch mittels Zeilenkameras erstellt werden. Dabei werden vor einer Zeilenkamera zwei Optiken platziert oder es werden zwei Zeilenkameras zueinander ausgerichtet, so dass zumindest grob eine Epipolargeometrie eingehalten wird. Justierfehler können per Software während einer Nachbearbeitung kompensiert werden. Aus den beiden Zeilenaufnahmen kann nach einer Kalibrierung wieder die dreidimensionale Form des Objektes entlang der aufgenommenen Linie ermittelt werden. Ist die Epipolarebene quer zu einer Scanrichtung angeordnet, so ist entsprechend nur quer zur Scanrichtung eine Stereorekonstruktion möglich.

Für die Stereorekonstruktion ist es erforderlich, dass in den Abbildungen korrespondierende Bildpunkte einander zugeordnet werden können. Dazu ist eine entsprechende Texturierung der Oberfläche des Objektes notwendig. Zur Rekonstruktion der Oberfläche aus Zeilenaufnahmen, welche quer zur Scanrichtung aufgenommen wurden, muss eine ausreichende Texturierung quer zur Scanrichtung vorliegen. Soll ein Objekt mit einer geringen eigenen Oberflächenstrukturierung (farbig oder geometrisch) erfasst werden ist es bekannt, ein Projektionssystem zu verwenden, um eine geeignete optische Texturierung zu erzeugen. Dabei sind sowohl hell-dunkel (schwarz-weiß) als auch farbige projizierte Texturierungen bekannt.

So zeigt die DE 10 2008 002 730 A1 ein Verfahren und eine Vorrichtung zu Erstellung von 3D-Aufnahmen eines Gegenstandes mit Hilfe einer Stereo-Aufnahme mit zwei Kameras. Um die Korrespondenzpunktzuordnung zu verbessern werden Grauwertmuster oder Farbmuster mit Hilfe einer Strukturblende auf den Gegenstand projiziert. Die Strukturelemente der Grauwert- oder Farbmuster weisen dabei stark unterschiedliche Helligkeitswerte auf. Die Grauwert- oder Farbmuster bilden dadurch eindeutige Bildmerkmale, welche als Korrespondenzpunkte einfach zu finden und auszuwerten sind. Eine Verfahrensvariante sieht vor, dass ein Referenzbild bei konstanter Beleuchtung und ein Strukturbild bei strukturierter Beleuchtung des Gegenstandes aufgenommen und daraus ein Verhältnisbild gebildet wird. Dadurch kann der Kontrast verstärkt und die Abhängigkeit von Oberflächeneigenschaften des Gegenstandes verringert werden.

Die farbigen Korrespondenzpunkte werden demnach durch eine farbig strukturierte Beleuchtung des Gegenstandes erreicht. Nachteilig muss bei bewegten Objekten während eines Scanvorgangs das verwendete Projektionssystem mitgeführt werden, was zu technisch aufwändigen Lösungen führt.

Die Schrift DE 10 2010 051 602 A1 offenbart ein Verfahren zur Bestimmung von Position und Entfernung von Merkmalen, das auf einer Differenzbildung von mindestens zwei Aufnahmen beruht. Die bei einer Stereoauswertung notwendigen Vergleiche eines Pixels aus dem einen Bild mit mehreren Pixeln des anderen Bildes werden vermieden, indem eine der Aufnahmen mit einer zusätzlichen Lichtquelle erfolgt, die bevorzugt als ein Blitzgerät ausgebildet ist. Hierdurch treten Unterschiede in dem Differenzbild besonders deutlich hervor. Weiter wird ausgeführt, dass der Nahbereich durch den Blitz besonders aufgehellt wird und vom Fernbereich in den Differenzaufnahmen getrennt werden kann. Zur Bestimmung der Differenz durch die Wirkung des Blitzes kann es ausreichen, wenn dieser nur in einem schmalen Teil des Spektrums strahlt. Zur Nutzung dieses Effekts können auch Filter vor der Kamera genutzt werden.

Objekte, die in gleichem Abstand von dem Blitzgerät angeordnet sind, weisen gleiche Helligkeitsquotienten zwischen den Bildern mit und ohne Blitz auf. Diese können möglicherweise durch ihre Eigenfarbe oder Reflexionsfähigkeit der Oberfläche unterschieden werden.

Aus der Druckschrift US 6 028 672A ist eine dreidimensionale Vermessung mittels einer Beleuchtung aus einer einzigen Lichtquelle und Richtung bekannt, wobei die Lichtquelle ein Muster auf das Objekt projiziert, welches eine ortsaufgelöste Wellenlängenabhängigkeit ("Regenbogenmuster") aufweist.

Die Druckschrift DE 11 2011 104 727 T5 beschreibt eine dreidimensionale Vermessung mittels einer strukturierten Beleuchtung, wobei die Lichtquelle drei um 120 Grad gegeneinander gedrehte mit keilförmiger Helligkeitsverteilung ausgelegte Farbverläufe aufweist.

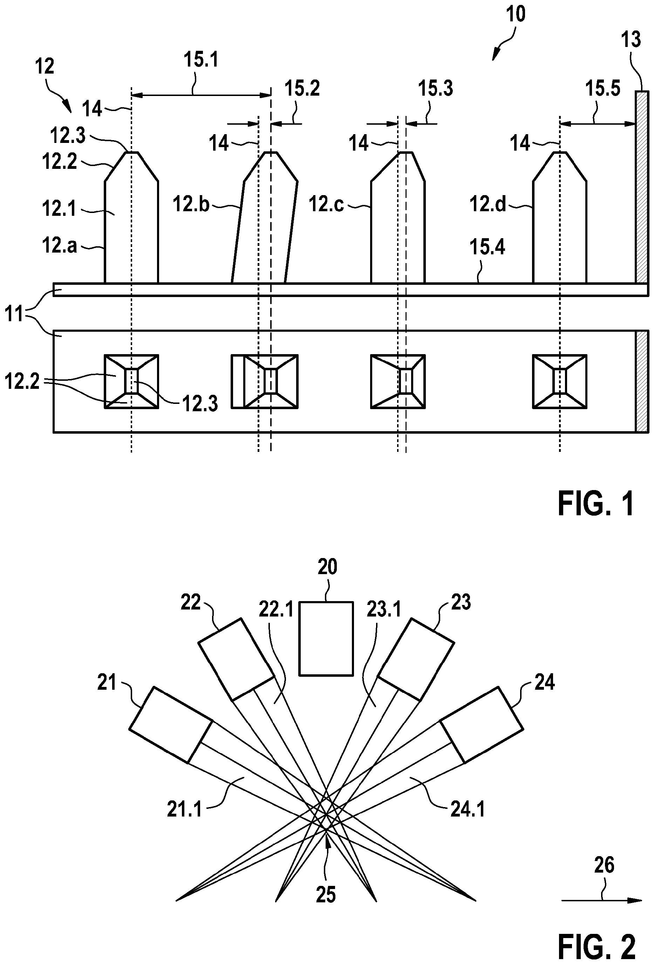

Die Druckschrift Ukida H et al: "3D shape measurements using stereo image scanner with three color light sources", Proceedings of the 21st IEEE Instrumentation and Measurement Technology Conference (IMTC) 2004, Seiten 639-644, ISBN 978-0-7803-8248-0, beschreibt eine 3D-Vermessung eines Objekts mit Teilflächen unterschiedlicher Farbe. Die vorgestellte Methode kombiniert eine photometrische Stereo-Auswertung, bei der die Variation der Helligkeit einer Teilfläche von Ihrem Abstand zur Lichtquelle ausgewertet wird, mit einer binokularen Stereo-Auswertung, bei der die Lageänderung von Bildpunkten bei Betrachtung aus unterschiedlichen Winkeln ausgewertet wird. Dabei wird das Objekt nacheinander mit Licht unterschiedlicher Farben aus drei Lichtquellen beleuchtet. Die Lichtquellen sind parallel zu einem CCD-Sensor und dessen Scan-Linie angeordnet (siehe Figur 1). Insgesamt wird durch das Vorgehen für jede Teilfläche die Farbabweichung korrigiert, die auf der Oberflächenform des Objekts beruht. Es wird die präzise Oberfächenfarbe (Albedo) für jede Region bestimmt, indem die Tiefeninformation berücksichtigt wird.

Es ist Aufgabe der Erfindung, eine Vorrichtung und ein Verfahren zur dreidimensionalen Erfassung eines gering texturierten Objektes in Echtzeit und bei hohem Durchsatz bereitzustellen.

### Offenbarung der Erfindung

Die Erfindung wird durch die unabhängigen Ansprüche 1 und 3 definiert.

Die die Vorrichtung betreffende Aufgabe der Erfindung wird dadurch gelöst, dass zumindest zwei Beleuchtungseinrichtungen vorgesehen sind, dass die Beleuchtungseinrichtungen aus verschiedenen Beleuchtungsrichtungen auf den Aufnahmebereich ausgerichtet sind, dass die Beleuchtungseinrichtungen den Aufnahmebereich jeweils flächig ausleuchten und dass die zumindest zwei Beleuchtungseinrichtungen Licht in unterschiedlichen Farben aussenden. Ein Ort auf der Oberfläche des Objektes wird so in Abhängigkeit von seiner Ausrichtung und Neigung bezogen auf die Beleuchtungseinrichtungen mit Licht unterschiedlicher Farbe angestrahlt. In den Bildern erscheinen die verschieden ausgerichteten und geneigten Oberflächenbereiche dadurch in unterschiedlichen Farben. Auf Grund der so erhaltenen Farbtextur können die Korrespondenzpunkte in den zugeordneten Bildern einander eindeutig zugeordnet und so ein dreidimensionales Abbild des Objektes rekonstruiert werden. Damit können auch Objekte dreidimensional erfasst werden, welche selbst eine geringe Textur bzw. Farbtextur (Albedo) aufweisen. Bei Objekten mit lokal starker Krümmung kann eine hoch aufgelöste Farbtextur erreicht werden. Dabei bilden sich sowohl Farbbereiche in den Farben der verschiedenen Beleuchtungseinrichtungen als auch daraus gebildete Mischfarben aus. Ebenso kann die Helligkeit in Abhängigkeit der Ausrichtung der Oberfläche variieren, was zu einer zusätzlichen Texturierung der Oberfläche führt.

Erfindungsgemäß ist zur dreidimensionalen Erfassung von bewegten Objekten entlang einer Fertigungsstraße die zumindest eine Farbkamera als Zeilenkamera ausgeführt, deren Zeile und/oder Zeilen quer zu einer Scanrichtung der Zeilenkamera ausgerichtet sind. Dabei können die Zeilen zweier Zeilenkameras zumindest grob in Epipolargeometrie nebeneinander und quer zur Scanrichtung angeordnet sein. Alternativ kann eine Zeilenkamera mit einer geeigneten Optik vorgesehen sein, um zwei unter einem geeigneten Triangulationswinkel aufgenommene Stereobilder zu erhalten.

Erfindungsgemäß ist es vorgesehen, dass die Beleuchtungseinrichtungen quer zu der Zeile und/oder den Zeilen der Zeilenkamera angeordnet und in einem Winkel zueinander auf den Aufnahmebereich ausgerichtet sind und/oder dass die Beleuchtungseinrichtungen in Scanrichtung angeordnet und in einem Winkel zueinander auf den Aufnahmebereich ausgerichtet sind. Bei quer zur Scanrichtung ausgerichteten Zeilenkameras ist eine Stereorekonstruktion nur in Richtung der Zeilen und somit quer zur Scanrichtung möglich. Um ein dreidimensionales Abbild des Objektes zu erhalten werden die rekonstruierten 3D-Zeilen zeilenweise aneinander gesetzt. Durch die Anordnung der Beleuchtungseinrichtungen quer zu den Zeilen der Zeilenkamera oder der Zeilenkameras wird eine starke Farbtextur der Oberfläche des Objektes im Aufnahmebereich der Kamera / Kameras und entlang der aufgenommenen Linie erhalten. Dadurch können in den zeilenförmigen Stereo-Abbildungen Korrespondenzpunkte eindeutig erkannt und einander zugeordnet werden. Vorzugsweise sind die Zeilen der Zeilenkamera / Zeilenkameras quer zur Scanrichtung ausgerichtet. Die Anordnung der Beleuchtungseinrichtungen entlang der Scanrichtung stellt somit eine einfache konstruktive Lösung dar, welche eine starke Farbtextur der Oberfläche des aufgenommenen Objektes entlang der durch die Zeilenkamera / Zeilenkameras aufgenommenen Linie bewirkt.

Um eine Stereorekonstruktion der Oberfläche des aufgenommen Objektes durchführen zu können sind die beiden Farbkameras zumindest grob in einer Epipolargeometrie zu dem Objekt ausgerichtet. Die Epipolargeometrie kann auch durch eine einzelne Farbkamera mit einer entsprechend vorgeschalteten Optik erreicht werden, so dass die nachfolgenden Ausführungen für beide Anordnungen gelten. Durch die Projektionszentren der Kameras und einen aufgenommenen Objektpunkt ist in bekannte Weise eine Epipolarebene gebildet. Um eine gute Ausleuchtung sowie eine starke farbliche Texturierung des Objektes entlang der aufgenommenen Linie zu erhalten ist es erfindungsgemäß vorgesehen, dass zumindest eine Beleuchtungseinrichtung auf einer Seite und zumindest eine zweite Beleuchtungseinrichtung auf der gegenüberliegenden Seite einer Epipolarebene angeordnet sind. Bei einer Anordnung mit zwei Farbkameras ist somit zumindest eine Beleuchtungseinrichtung auf einer Seite einer Verbindungslinie zwischen den beiden Kameras und eine zweite Beleuchtungseinrichtung auf der gegenüberliegenden Seite angeordnet. Bei einer Anordnung mit einer oder zwei Zeilenkameras, deren Zeilen quer zu einer Scanrichtung ausgerichtet sind, kann vorzugsweise eine Beleuchtungseinrichtung in Scanrichtung vor und eine nach der Zeilenkamera / den Zeilenkameras angeordnet sein.

Eine gleichmäßig Ausleuchtung des Objektes kann weiterhin dadurch erreicht werden, dass die Beleuchtungseinrichtungen entlang einer Bogenbahn um den Aufnahmebereich angeordnet sind, insbesondere dass die Beleuchtungseinrichtungen entlang einer Kreisbahn um den Aufnahmebereich angeordnet sind.

Die Stereorekonstruktion der Oberfläche eines aufgenommenen Objektes wird erfindungsgemäß dadurch ermöglicht, dass der Vorrichtung einer Steuereinheit zugeordnet ist, dass die einander zugeordneten und unter dem Triangulationswinkel erstellten Bildaufnahme der Steuereinheit zugeführt sind und dass die Steuereinheit dazu ausgelegt ist, Korrespondenzpunkte zumindest an Hand der Farbe eines jeweiligen Ortes auf der Oberfläche eines aufgenommenen Objektes einander zuzuordnen, aus zwei Aufnahmen der zumindest einen Zeilenkamera aus zumindest zwei Aufnahmerichtungen ein Höhenprofil entlang einer Linie der Oberfläche des Objektes quer zur Scanrichtung zu erfassen, und eine dreidimensionale Erfassung der Oberfläche durch aneinanderfügen aufeinanderfolgender Höhenprofile durchzuführen.

Die das Verfahren betreffende Aufgabe der Erfindung wird dadurch gelöst, dass das Objekt während der Aufnahme der Bilder in einem Aufnahmebereich aus verschiedenen Beleuchtungsrichtungen jeweils flächig mit Licht einer anderen Farbe beleuchtet wird und dass einander zugeordnete Korrespondenzpunkte zumindest aus der Farbe des jeweiligen Ortes der Oberfläche ermittelt werden. Durch die flächige Beleuchtung des Objektes aus unterschiedlichen Richtungen und in unterschiedlichen Farben erscheint die Oberfläche in Abhängigkeit von ihrer Ausrichtung und Neigung bezogen auf die Beleuchtung unterschiedlich farbig. Es wird somit eine Farbtexturierung der Oberfläche erreicht, die nicht nur auf die Farbtextur (Albedo) des Objektes zurückgeht. Diese Farbtexturierung kann für die Zuordnung der Korrespondenzpunkte und die Stereorekonstruktion des Oberflächenprofils des aufgenommenen Objektes verwendet werden. Die Ausbildung einer farbigen Textur ist besonders bei metallischen Oberflächen, welche selbst keine starke Farbtexturierung aufweisen, vorteilhaft. Insbesondere bei Objekten mit lokal starker Krümmung können so viele geeignete Korrespondenzpunkte generiert werden. Vorteilhaft wird die Texturierung durch die Ausrichtung und Neigung der einzelnen Oberflächenabschnitte erreicht. Auf eine bereits strukturierte Beleuchtung des Objektes kann so verzichtet werden.

Um beispielsweise innerhalb eines Fertigungsprozesses, beispielsweise zur Qualitätssicherung, eine große Anzahl an Objekten dreidimensional erfassen zu können ist es vorteilhaft vorgesehen, dass die zumindest zwei Bilder mittels zumindest einer Zeilenkamera erstellt werden, deren Zeile und/oder Zeilen quer zu einer Scanrichtung der Zeilenkamera ausgerichtet sind. Die Objekte können so an der Zeilenkamera bzw. den Zeilenkameras vorbeigeführt und dabei aufgenommen werden. Alternativ dazu können auch die Zeilenkamera oder die Zeilenkameras relativ zu dem Objekt bewegt werden. Vorteilhaft ist, wie zuvor ausgeführt, keine strukturierte Beleuchtung des Objektes erforderlich, welche mit den Objekten bewegt werden muss. Dadurch wir der Aufbau der erforderlichen Messeinrichtung deutlich vereinfacht.

Eine gleichmäßige Beleuchtung des Messobjektes bei gleichzeitig stark ausgeprägter, farbiger Texturierung der Oberfläche wird dadurch erreicht, dass die Beleuchtung des Aufnahmebereichs mit unterschiedlichen Farben durch zumindest zwei gegenüberliegend zu einer Epipolarebene angeordnete Beleuchtungseinrichtungen erfolgt.

Um auch mittels einer oder mehrerer Zeilenkameras ein dreidimensionales Abbild der Oberfläche eines Messobjektes zu erhalten ist es erfindungsgemäß vorgesehen, dass aus zwei Aufnahmen der zumindest einen Zeilenkamera aus zumindest zwei Aufnahmerichtungen ein Höhenprofil entlang einer Linie der Oberfläche des Objektes quer zur Scanrichtung erfasst wird und dass eine dreidimensionale Erfassung der Oberfläche durch aneinanderfügen aufeinanderfolgender Höhenprofile erfolgt.

Die Erfindung wird im Folgenden anhand eines in den Figuren dargestellten Ausführungsbeispiels näher erläutert. Es zeigen:
Figur 1 in einer schematischen Darstellung eine elektronische Schaltung in einer Seitenansicht und einer Draufsicht,
Figur 2 eine Vorrichtung zur räumlichen Erfassung der Oberfläche eines Objektes in einer schematischen Darstellung und
Figur 3 einen Aufnahmebereich der in Figur 2 gezeigten Vorrichtung mit einem Steckkontakt in einer Draufsicht.

Figur 1 zeigt in einer schematischen Darstellung eine elektronische Schaltung 10 in einer Seitenansicht und einer Draufsicht. Dabei ist im oberen Bereich der Darstellung die Seitenansicht und dem unteren die zugehörige Draufsicht der elektronischen Schaltung 10 gezeigt. Vier Steckkontakte 12 sind nebeneinander auf einer Leiterplatte 11 angeordnet. Die vier Steckkontakte 12 weisen jeweils ein stiftförmiges Basisteil 12.1 auf. Die Basisteile 12.1 gehen über Schrägen 12.2 in jeweilige Spitzen 12.3 der Steckkontakte 12 über. Im Betrieb können in einem Stecker zusammengefasste Buchsen auf die Steckkontakte 12 aufgesteckt werden, wodurch eine elektrische Verbindung zu der elektronischen Schaltung 10 hergestellt werden kann. Dazu ist es erforderlich, dass die Steckkontakte 12 mit ihren Mittellängsachsen und ihren Spitzen 12.3 möglichst genau auf den gewünschten Positionen, wie sie durch als Punktlinien dargestellte Positionslinien 14 markiert sind, angeordnet sind.

Ein erster Steckkontakt 12.a ist exakt zu seiner zugehörigen Positionslinie 14 ausgerichtet. Dabei sind insbesondere auch die Schrägen 12.2 symmetrisch ausgebildet, sodass die Spitze 12.3 des ersten Steckkontakts 12.a genau auf der zugehörigen Positionslinie 14 liegt. Ein zweiter Steckkontakt 12.b ist gegenüber seiner Positionslinie 14 schräg ausgerichtet. Entsprechend eines durch einen Doppelpfeil markierten ersten Fehlers 15.1 (Pin to Pin distance EPA) ist damit der Spitze- zu Spitzeabstand zwischen dem ersten Steckkontakt 12.a und dem zweiten Steckkontakt 12.b nicht korrekt eingestellt. Gleichzeitig liegt die Spitze 12.3 des zweiten Steckkontakts 12.b entsprechend einem durch zwei Pfeile markierten zweiten Fehler 15.2 (Pin-to-Base-Position HL3) neben der zugehörigen Positionslinie 14. Bei dem dritten Steckkontakt 12.c verlaufen die Schrägen 12.2 asymmetrisch, sodass entsprechend eines dritten Fehlers 15.3 (Pin Tip / Pin Center) die Spitze 12.3 seitlich beabstandet zu der Mittellängsachse und damit zu der Positionslinie 14 des dritten Steckkontakts 12.c liegt. Zwischen dem dritten Steckkontakt 12.c und einem vierten Steckkontakt 12.d ist fehlerhaft ein weiterer Steckkontakt 12 ausgelassen (vierter Fehler 15.4, missing pins). Ein fünfter Fehler 15.5 (Pin-to-Chamfer Position BCM) beschreibt eine Abweichung der Position eines Steckkontaktes 12, vorliegend des vierten Steckkontaktes 12.d, zu einer Kante 13 der Leiterplatte 11.

Zur Qualitätssicherung bei der Herstellung einer solchen elektronischen Schaltung 10 ist es bekannt, durch eine dreidimensionale Erfassung der Oberfläche der elektronischen Schaltung 10 die genaue Position insbesondere der Spitzen 12.3 der Steckkontakte 12 in Bezug auf die Leiterplatte 11 zu bestimmen. Dadurch können zumindest die beschriebenen fünf Fehler 15.1, 15.2, 15.3, 15.4, 15.5 erkannt und ein fehlerhaftes Bauteil entsprechend aussortiert werden.

Zur dreidimensionalen optischen Erfassung solcher und ähnlicher Objekte sind zahlreiche Messverfahren bekannt. Ein klassisches Verfahren ist die Stereo-Bildaufnahme. Bei dieser werden im einfachsten Fall unter einem Triangulationswinkel zwei Bilder von dem Objekt gemacht. Durch eine vorangegangene Kalibrierung ist es möglich, über diese Ansichten die dreidimensionale Form des Messobjektes zu bestimmen. Es ist weiterhin bekannt, eine derartige dreidimensionale Erfassung der Oberfläche eines Objektes mit Zeilenkameras 20 durchzuführen, wie sie zu Figur 2 schematisch dargestellt sind. Dazu werden vor einer Zeilenkamera 20 zwei geeignete Optiken angeordnet oder es werden zwei Zeilenkameras 20 in einem geeigneten Winkel zueinander ausgerichtet, sodass zumindest grob die erforderliche Epipolargeometrie eingehalten wird. Kleinere Justagefehler können dabei per Software durch eine geeignete Nachbearbeitung kompensiert bzw. berücksichtigt werden.

Um aus den zumindest zwei unter einem Triangulationswinkel aufgenommenen Bildern des Objektes dessen Oberflächenprofil rekonstruieren zu können müssen Punkte auf der Oberfläche des Objektes in den beiden Bildern einander eindeutig zuordenbar sein. Dies kann bei Objekten, die keine geeignete Oberflächentexturierung aufweisen, dazu führen, dass deren dreidimensionale Erfassung mittels Stereo-Bildaufnahmen nicht möglich ist. Insbesondere metallische Oberflächen, wie die der in Figur 1 gezeigten Steckkontakte 12, weisen keine eigene Farbtextur (Albedo) auf und sind daher nur schwer dreidimensional zu erfassen. Nach bekannten Verfahren kann eine geeignete optische Texturierung dadurch erreicht werden, dass das Objekt strukturiert, beispielsweise mit Hell-/Dunkelbereichen oder mit strukturiert wechselnden Farben, beleuchtet wird. Geeignete Korrespondenzpunkte können so anhand der aufgestrahlten Texturierung einander zugeordnet werden. Nachteilig hierbei ist, dass die texturierte Beleuchtung bei einem bewegten Objekt mitgeführt werden muss, was zu einer aufwändigen Konstruktion der erforderlichen Vorrichtung führt.

Figur 2 zeigt eine erfindungsgemäße Vorrichtung zur räumlichen Erfassung der Oberfläche eines nicht gezeigten Objektes in einer schematischen Darstellung.

Zwei Zeilenkameras 20 sind nebeneinander angeordnet und zu einem Aufnahmebereich 25 hin ausgerichtet. In der gewählten Seitenansicht ist eine Zeilenkamera 20 von der davor angeordneten Zeilenkamera 20 verdeckt. Die Zeilen der Zeilenkameras 20 sind quer zu einer durch einen Pfeil angegebenen Scanrichtung 26 ausgerichtet. Die Scanrichtung 26 gibt dabei die Bewegungsrichtung eines nicht dargestellten, zu erfassenden Objektes durch den Aufnahmebereich 25 an. Die Zeilen der Zeilenkameras 20 sind unter einem Triangulationswinkel auf den Aufnahmebereich 25 ausgerichtet. Dadurch wird zwischen den Zeilen der Zeilenkameras 20 und einer Aufnahmelinie im Fokusbereich der Zeilenkameras 20 im Aufnahmebereich 25 eine Epipolarebene aufgespannt, welche quer, vorliegend senkrecht, zur Scanrichtung 26 ausgerichtet ist.

Entlang der Scanrichtung seitlich der Zeilenkameras 20 sind vorliegend vier Beleuchtungseinrichtungen 21, 22, 23, 24 angeordnet. Die Beleuchtungseinrichtungen 21, 22, 23, 24 sind jeweils auf den Aufnahmebereich 25 ausgerichtet. Zueinander sind die Beleuchtungseinrichtungen 21, 22, 23, 24 in einem Winkel angeordnet. Dadurch kreuzen sich die von den Beleuchtungseinrichtungen 21, 22, 23, 24 ausgehenden Strahlengänge 21.1, 22.1, 23.1, 24.1 im Aufnahmebereich 25. Die Strahlengänge 21.1, 22.1, 23.1, 24.1 sind so ausgebildet, dass sie den Aufnahmebereich 25 jeweils flächig ausleuchten. Vorliegend sind die Beleuchtungseinrichtungen 21, 22, 23, 24 auf einer Bogenbahn um den Aufnahmebereich 25 ausgerichtet. Die Bogenbahn entspricht im gezeigten Ausführungsbeispiel einer Kreisbahn. Es sind jedoch auch andere Bahnformen, beispielsweise elliptische Bogenbahnen, denkbar. Die Beleuchtungseinrichtungen 21, 22, 23, 24 sind auf einer in Scanrichtung 26 verlaufenden Ebene angeordnet. Die Zeilenkameras 20 sind ebenfalls symmetrisch zu dieser Ebene und vorliegend oberhalb des Aufnahmebereichs 25 angeordnet.

Die Beleuchtungseinrichtungen 21, 22, 23, 24 senden jeweils Licht in einer unterschiedlichen Farbe aus. Dazu können unterschiedliche Farbfilter in den Strahlengängen 21.1, 22.1, 23.1, 24.1 vorgesehen sein oder die Beleuchtungseinrichtungen 21, 22, 23, 24 weisen in unterschiedlichen Farben leuchtende Lichtquellen, beispielsweise farbige LEDs, auf.

Vorliegend sind die erste und die zweite Beleuchtungseinrichtungen 21, 22 in Scanrichtung 26 vor den Zeilenkameras 20 und die dritte und die vierte Beleuchtungseinrichtungen 23, 24 in Scanrichtung 26 nach den Zeilenkameras 20 angeordnet. Damit wird erreicht, dass der Aufnahmebereich 25 vollständig und aus verschiedenen Beleuchtungsrichtungen in unterschiedlichen Farben ausgeleuchtet wird. Abweichend zum gezeigten Ausführungsbeispiel können auch mehr oder weniger als vier, aber zumindest zwei Beleuchtungseinrichtungen 21, 22, 23, 24 vorgesehen sein. Dabei ist vorzugsweise immer zumindest eine Beleuchtungseinrichtung 21, 22, 23, 24 in Scanrichtung vor und eine nach den Zeilenkameras 20 angeordnet.

Wird ein zu messendes Objekt in den Aufnahmebereich 25 eingebracht, so werden verschiedene Oberflächenbereiche des Objektes je nach ihrer Neigung und Ausrichtung in Bezug auf die Beleuchtungseinrichtungen 21, 22, 23, 24 unterschiedlich farbig beleuchtet. Entsprechend erscheinen die verschiedenen Bereiche des Objektes in den mittels der Zeilenkameras 20 aufgenommenen Bildern unterschiedlich farbig. Die Zeilenkameras 20 sind entsprechend als Farbkameras ausgebildet. Die durch die farbige Beleuchtung aus unterschiedlichen Richtungen und die verschiedenen Neigungen und Ausrichtungen der Oberflächenbereiche erhaltene Farbtexturierung ermöglicht eine eindeutige Zuordnung von Korrespondenzpunkten in den einander zugeordneten Stereobildern. Die Farbkontraste gehen dabei nicht oder nicht nur auf die Farbtextur (Albedo) der Oberfläche des Messobjektes zurück. Es können somit auch Objekte dreidimensional erfasst werden, welche selbst eine geringe oder keine Oberflächentexturierung aufweisen, wie dies beispielsweise für die in Figur 1 gezeigten Steckkontakte 12 zutrifft. Die in Figur 2 gezeigte Anordnung der Beleuchtungseinrichtungen 21, 22, 23, 24 ist insbesondere für die Verwendung mit Zeilenkameras 20 geeignet, da durch die entlang einer in Scanrichtung 26 verlaufenden Bogenbahn angeordneten Beleuchtungseinrichtungen 21, 22, 23, 24 eine starke Farbtextur der Oberfläche eines in den Aufnahmebereich 25 eingebrachten Objektes quer zur Scanrichtung und damit in Richtung der Zeilen der Zeilenkameras 20 bewirkt wird. Diese Richtung erlaubt durch die zuvor beschriebene Anordnung der Zeilen entsprechend einer Epipolargeometrie die dreidimensionale Rekonstruktion des aufgenommenen Oberflächenbereichs. Vorteilhaft entsteht die Farbkodierung unmittelbar auf der Oberfläche. Es muss demnach keine strukturierte Beleuchtung mit den bewegten Objekten verfahren werden, wodurch ein sehr einfacher Aufbau der Vorrichtung erreicht wird.

Die gezeigte Anordnung und das zugehörige Verfahren eignen sich insbesondere für die dreidimensionale Erfassung von Objekten mit lokal sehr hohen Krümmungsradien, beispielsweise der in Figur 1 gezeigten Steckkontakte 12. Zu beachten ist, dass das Verfahren erkennen muss, ob eine streuende Reflektion vorliegt und damit die Stereorekonstruktion korrekt ist, oder ob eine spekulare Reflektion vorliegt. Letztere führt dazu, dass eigentlich die Spiegelungsposition rekonstruiert werden würde. Dieser Aspekt wird dadurch berücksichtigt, dass die Farbkodierung über weite Winkelbereiche homogen ist. Entsteht an der Oberfläche ein Spekularreflex, dann wird an dieser Stelle die Position der Beleuchtung abgebildet. Von den beiden Zeilenkameras 20 wird ein unterschiedlicher Punkt auf der Beleuchtung abgebildet, wodurch die Stereobedingungen verletzt werden. Dies hat jedoch dann keine Auswirkung, wenn diese beiden Punkte mit derselben Farbe kodiert werden. Insbesondere bei Messobjekten mit lokal hohen Biegeradien überwiegt der Vorteil durch viele Stützpunkte (Korrespondenzpunkte) in den Stereorekonstruktion den Nachteil, dass diese Punkte mit kleinen Fehlern behaftet sind, die sich aufgrund der Deflektometriebedingungen ergeben. Dies trifft insbesondere für die Inspektion der in Figur 1 gezeigten Steckkontakte 12 zu. Durch die metallischen Spitzen 12.3 der Steckkontakte 12 ist eine Rekonstruktion alleine aufgrund der Eigentextur der Steckkontakte 12 nahezu nicht möglich. Durch die lokal hohen Krümmungsradien der Spitzen 12.3 mit den zugeordneten Schrägen 12.2 ist es jedoch möglich, diese lokal unterschiedlichen Neigungen in unterschiedlichen Farben zusammenzufassen. Es entsteht dabei eine neue Farbtextur aufgrund der lokalen dreidimensionalen Form. Für die optische Inspektion kann insbesondere die Lage der Spitzen 12.3 im dreidimensionalen Raum sein und nicht die lokale, hochfrequente Neigung aufgrund der Rauheit der Oberfläche der Steckkontakte 12. Ist es bekannt, dass die zu erfassende dreidimensionale Form keine hohen Raumfrequenzen aufweist bzw. diese gemittelt werden können, so ist eine Unterscheidung möglich, ob eine Fehlrekonstruktion aufgrund eines spekularen Reflexes vorliegt. Dadurch können solche Bereiche bei der Erstellung des dreidimensionalen Abbildes des Objektes ausgeblendet werden.

Die gezeigte Vorrichtung und das beschriebene Verfahren eigenen sich insbesondere für metallische Oberflächen mit diffusem Streulichtanteil. Die Rauheit der Oberfläche sollte größer als 2µm sein. Damit können vorzugsweise alle technischen Oberflächen erfasst werden, die nicht geschliffen oder verspiegelt sind.

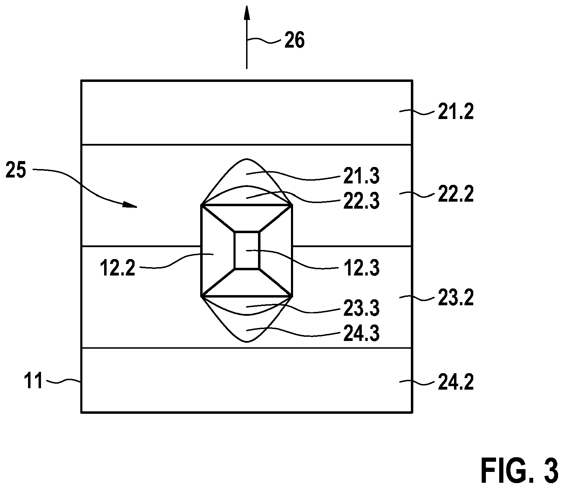

Figur 3 zeigt den Aufnahmebereich 25 der in Figur 2 gezeigten Vorrichtung mit einem Steckkontakt 12 in einer Draufsicht und damit aus Sicht der in Figur 2 gezeigten Zeilenkameras 20. der Steckkontakt 12 ist dabei Teil einer zu inspizierenden elektronischen Schaltung 10 entsprechend Figur 1. Die Scanrichtung 26 ist durch einen Pfeil vorgegeben. Durch die flächige Beleuchtung des Aufnahmebereiches 25 aus verschiedenen Richtungen mittels der in Figur 2 gezeigten Beleuchtungseinrichtungen 21, 22, 23, 24 sind Farbstreifen 21.2, 22.2, 23.2, 24.2 entlang der Oberfläche der Leiterplatte 11 ausgebildet. Die Farbstreifen 21.2, 22.2, 23.2, 24.2 bilden dabei fließende Übergänge zwischen den von den Beleuchtungseinrichtungen 21, 22, 23, 24 ausgesendeten Lichtfarben. Ein erster Farbstreifen 21.1 ist überwiegend der ersten Beleuchtungseinrichtungen 21, ein zweiter Farbstreifen 22.2 der zweiten Beleuchtungseinrichtungen 22, ein dritter Farbstreifen 23.2 der dritten Beleuchtungseinrichtungen 23 und ein vierter Farbstreifen 24.2 der vierten Beleuchtungseinrichtungen 24 zugeordnet. Die in Figur 2 dargestellten Strahlengänge 21.1, 22.1, 23.1, 24.1 kreuzen sich im Aufnahmebereich 25, in welchem der Steckkontakt 12 durch seine Scanbewegung in Scanrichtung 26 positioniert ist. Die Schrägen 12.2 und die Spitze 12.3 des Steckkontakts 12 erscheinen so in Abhängigkeit von ihrer Ausrichtung und Neigung gegenüber den Beleuchtungseinrichtungen 21, 22, 23, 24 in unterschiedlichen Farben.

Bei Messobjekten, die selbst eine geringe Textur, jedoch eine stark ausgeprägte dreidimensionale Struktur aufweisen, weisen die erfindungsgemäße Vorrichtung und das erfindungsgemäße Verfahren einen weiteren Vorteil auf. Es entstehen viele Schattenlinien, die aufgrund der Anordnung in Scanrichtung für die Stereorekonstruktion entgegen der Scanrichtung 26 für beide Zeilenkameras 20 verwendet werden können. Die Schattenlinien sind durch die gezeigten Farbschatten 21.3, 22.3, 23.3, 24.3 angedeutet.

## Patentansprüche

1. System umfassend eine Steuereinheit und eine Vorrichtung zur räumlichen Erfassung der Oberfläche eines Objektes mittels Stereo-Bildaufnahmen, mit zumindest einer Farbkamera, welche auf einen Aufnahmebereich (25) zur Anordnung des Objektes ausgerichtet ist, wobei die zumindest eine Farbkamera die Aufnahme von zumindest zwei Bildern des Objektes unter einem Triangulationswinkel aus verschiedenen Aufnahmerichtungen ermöglicht, wobei weiterhin
- zumindest zwei Beleuchtungseinrichtungen (21, 22, 23, 24) vorgesehen sind,
- die Beleuchtungseinrichtungen (21, 22, 23, 24) aus verschiedenen Beleuchtungsrichtungen auf den Aufnahmebereich (25) ausgerichtet sind,
- die Beleuchtungseinrichtungen (21, 22, 23, 24) dazu eingerichtet sind, den Aufnahmebereich (25) jeweils flächig auszuleuchten,
- die zumindest zwei Beleuchtungseinrichtungen (21, 22, 23, 24) dazu eingerichtet sind, Licht in unterschiedlichen Farben aussenden, wobei bei Objekten mit lokal starker Krümmung eine hoch aufgelöste Farbtextur erreicht werden kann, wobei sich sowohl Farbbereiche in den Farben der verschiedenen Beleuchtungseinrichtungen als auch daraus gebildete Mischfarben ausbilden,
- der Vorrichtung die Steuereinheit zugeordnet ist,
- die einander zugeordneten und unter dem Triangulationswinkel erstellten Bildaufnahmen der Steuereinheit zugeführt sind,
- die Steuereinheit dazu ausgelegt ist, Korrespondenzpunkte zumindest an Hand der Farbe eines jeweiligen Ortes auf der Oberfläche eines aufgenommenen Objektes einander zuzuordnen,
- die zumindest eine Farbkamera als Zeilenkamera (20) ausgeführt ist, deren Zeile und/oder Zeilen quer zu einer Scanrichtung (26) der Zeilenkamera (20) ausgerichtet ist/sind,
- die Beleuchtungseinrichtungen (21, 22, 23, 24) quer zu der Zeile und/oder den Zeilen der Zeilenkamera (20) angeordnet und in einem Winkel zueinander auf den Aufnahmebereich (25) ausgerichtet sind und/oder die Beleuchtungseinrichtungen (21, 22, 23, 24) in Scanrichtung (26) angeordnet und in einem Winkel zueinander auf den Aufnahmebereich (25) ausgerichtet sind, und
- zumindest eine Beleuchtungseinrichtung (21, 22, 23, 24) auf einer Seite und zumindest eine zweite Beleuchtungseinrichtung (21, 22, 23, 24) auf der gegenüberliegenden Seite einer Epipolarebene angeordnet sind, und
- die Steuereinheit dazu eingerichtet ist, aus zwei Aufnahmen der zumindest einen Zeilenkamera (20) aus zumindest zwei Aufnahmerichtungen ein Höhenprofil entlang einer Linie der Oberfläche des Objektes quer zur Scanrichtung (26) zu erfassen und eine dreidimensionale Erfassung der Oberfläche durch aneinanderfügen aufeinanderfolgender Höhenprofile durchzuführen.

2. System nach Anspruch 1, wobei die Beleuchtungseinrichtungen (21, 22, 23, 24) entlang einer Bogenbahn um den Aufnahmebereich (25) angeordnet sind, insbesondere wobei die Beleuchtungseinrichtungen (21, 22, 23, 24) entlang einer Kreisbahn um den Aufnahmebereich (25) angeordnet sind.

3. Verfahren zur räumlichen Erfassung der Oberfläche eines Objektes mittels Stereo-Bildaufnahmen, wobei zumindest zwei Bilder des Objektes mittels zumindest einer Farbkamera, welche auf einen Aufnahmebereich (25) zur Anordnung des Objekts gerichtet ist, aus verschiedenen Aufnahmerichtungen erstellt werden, wobei gleiche Orte auf der Oberfläche des Objektes in den Bildern als einander zugeordnete Korrespondenzpunkte ermittelt werden und wobei aus der Position der Korrespondenzpunkte auf den Bildern und dem Winkel zwischen den Aufnahmerichtungen der Bilder die räumliche Position des jeweiligen Ortes auf der Oberfläche ermittelt wird, wobei weiterhin
- das Objekt während der Aufnahme der Bilder mittels mindestens zweier Beleuchtungseinrichtungen (21, 22, 23, 24) in dem Aufnahmebereich (25) aus verschiedenen Beleuchtungsrichtungen jeweils flächig mit Licht einer anderen Farbe beleuchtet wird, wobei bei Objekten mit lokal starker Krümmung eine hoch aufgelöste Farbtextur erreicht werden kann, wobei sich sowohl Farbbereiche in den Farben der verschiedenen Beleuchtungseinrichtungen als auch daraus gebildete Mischfarben ausbilden,
- einander zugeordnete Korrespondenzpunkte zumindest aus der Farbe des jeweiligen Ortes der Oberfläche ermittelt werden,-die zumindest zwei Bilder mittels zumindest einer Zeilenkamera (20) erstellt werden, deren Zeile und/oder Zeilen quer zu einer Scanrichtung (26) der Zeilenkamera (20) ausgerichtet sind und die Beleuchtung des Aufnahmebereichs (25) mit unterschiedlichen Farben erfolgt, wobei zumindest eine Beleuchtungseinrichtung (21, 22, 23, 24) auf einer Seite und zumindest eine zweite Beleuchtungseinrichtung (21, 22, 23, 24) auf der gegenüberliegenden Seite einer Epipolarebene angeordnet sind, wobei
- aus zwei Aufnahmen der zumindest einen Zeilenkamera (20) aus zumindest zwei Aufnahmerichtungen ein Höhenprofil entlang einer Linie der Oberfläche des Objektes quer zur Scanrichtung (26) erfasst wird und eine dreidimensionale Erfassung der Oberfläche durch aneinanderfügen aufeinanderfolgender Höhenprofile erfolgt.

## Claims

1. System comprising a control unit and an apparatus for spatially capturing the surface of an object by means of stereo image recordings, having at least one colour camera oriented towards a recording region (25) for arranging the object, wherein the at least one colour camera enables the recording of at least two images of the object at a triangulation angle from different recording directions, wherein furthermore
- at least two illumination devices (21, 22, 23, 24) are provided,
- the illumination devices (21, 22, 23, 24) are oriented towards the recording region (25) from different illumination directions,
- the illumination devices (21, 22, 23, 24) are configured to fully illuminate the recording region (25) in each case two-dimensionally,
- the at least two illumination devices (21, 22, 23, 24) are configured to emit light in different colours, wherein a highly resolved colour texture can be achieved in objects having a locally strong curvature, wherein colour regions are formed in the colours of the different illumination devices and also in mixed colours formed therefrom,
- the control unit is assigned to the apparatus,
- the mutually assigned image recordings produced at the triangulation angle are fed to the control unit,
- the control unit is designed to assign correspondence points to one another at least on the basis of the colour of a respective location on the surface of a recorded object,
- the at least one colour camera is configured as a line-scan camera (20), the line and/or lines of which is/are aligned transversely to a scanning direction (26) of the line-scan camera (20),
- the illumination devices (21, 22, 23, 24) are arranged transversely to the line and/or the lines of the line-scan camera (20) and are oriented towards the recording region (25) at an angle with respect to one another, and/or the illumination devices (21, 22, 23, 24) are arranged in the scanning direction (26) and are oriented towards the recording region (25) at an angle with respect to one another, and
- at least one illumination device (21, 22, 23, 24) is arranged on one side and at least one second illumination device (21, 22, 23, 24) is arranged on the opposite side of an epipolar plane, and
- the control unit is configured to capture a height profile along a line of the surface of the object transversely to the scanning direction (26) from two recordings of the at least one line-scan camera (20) from at least two recording directions and to perform three-dimensional capturing of the surface by combining successive height profiles.

2. System according to Claim 1, wherein the illumination devices (21, 22, 23, 24) are arranged along a curved path around the recording region (25), in particular wherein the illumination devices (21, 22, 23, 24) are arranged along a circular path around the recording region (25).

3. Method for spatially capturing the surface of an object by means of stereo image recordings, wherein at least two images of the object are taken from different recording directions by means of at least one colour camera, which is oriented towards a recording region (25) for arranging the object, wherein identical locations on the surface of the object are ascertained in the images as mutually assigned correspondence points and wherein the spatial position of the respective location on the surface is ascertained from the position of the correspondence points on the images and the angle between the recording directions of the images, wherein furthermore
- the object is illuminated during the recording of the images by means of at least two illumination devices (21, 22, 23, 24) in the recording region (25) from different illumination directions in each case two-dimensionally with light of a different colour, wherein a highly resolved colour texture can be achieved in objects having a locally strong curvature, wherein colour regions are formed in the colours of the different illumination devices and also in mixed colours formed therefrom,
- mutually assigned correspondence points are ascertained at least from the colour of the respective location of the surface,
- the at least two images are produced by means of at least one line-scan camera (20), the line and/or lines of which are aligned transversely to a scanning direction (26) of the line-scan camera (20) and the recording region (25) is illuminated with different colours, wherein at least one illumination device (21, 22, 23, 24) is arranged on one side and at least one second illumination device (21, 22, 23, 24) is arranged on the opposite side of an epipolar plane, wherein
- a height profile along a line of the surface of the object transversely to the scanning direction (26) is captured from two recordings of the at least one line-scan camera (20) from at least two recording directions, and three-dimensional capturing of the surface is performed by combining successive height profiles.

## Revendications

1. Système comprenant une unité de commande et un dispositif de détection spatiale de la surface d'un objet au moyen de capture d'images stéréo, ledit système comprenant au moins une caméra couleur qui est orientée sur une zone de capture (25) destinée à l'agencement de l'objet, l'au moins une caméra couleur permettant la capture d'au moins deux images de l'objet sous un angle de triangulation formé de différentes directions de capture, en outre
- au moins deux moyens d'éclairage (21, 22, 23, 24) étant prévus,
- les moyens d'éclairage (21, 22, 23, 24) étant orientés sur la zone de capture (25) à partir de différentes directions d'éclairage,
- les moyens d'éclairage (21, 22, 23, 24) étant conçus pour éclairer à chaque fois la zone de réception (25) dans deux dimensions,
- les au moins deux moyens d'éclairage (21, 22, 23, 24) étant conçus pour émettre de la lumière dans différentes couleurs, une texture de couleur à haute résolution pouvant être obtenue dans le cas d'objets présentant une courbure localement forte, les zones de couleur dans les couleurs des différents moyens d'éclairage ainsi que des couleurs mélangées formées à partir de celles-ci étant formées,
- le dispositif étant associé à l'unité de commande,
- les captures d'images qui sont associées les unes aux autres et qui sont créées sous l'angle de triangulation étant transmises à l'unité de commande,
- l'unité de commande étant conçue pour associer des points de correspondance entre eux au moins sur la base de la couleur d'un emplacement respectif sur la surface d'un objet capturé,
- l'au moins une caméra couleur étant réalisée comme une caméra à lignes (20) dont la ligne et/ou les lignes sont orientées transversalement à une direction de balayage (26) de la caméra à lignes (20),
- les moyens d'éclairage (21, 22, 23, 24) étant disposés transversalement à la ligne et/ou aux lignes de la caméra à lignes (20) et étant orientés angulairement les uns par rapport aux autres sur la zone de capture (25) et/ou les moyens d'éclairage (21, 22, 23, 24) étant disposés dans la direction de balayage (26) et étant orientés angulairement les uns par rapport aux autres sur la zone de capture (25), et
- au moins un moyen d'éclairage (21, 22, 23, 24) étant disposé d'un côté et au moins un deuxième moyen d'éclairage (21, 22, 23, 24) étant disposé du côté opposé d'un plan épipolaire, et
- l'unité de commande étant conçue pour détecter un profil de hauteur le long d'une ligne de la surface de l'objet transversalement à la direction de balayage (26) à partir de deux captures de l'au moins une caméra linéaire (20) effectuées à partir d'au moins deux directions de capture et pour effectuer une détection tridimensionnelle de la surface par assemblage de profils de hauteur successifs.

2. Système selon la revendication 1, les moyens d'éclairage (21, 22, 23, 24) étant disposés le long d'un chemin courbe autour de la zone de capture (25), en particulier les moyens d'éclairage (21, 22, 23, 24) étant disposés le long d'un chemin courbe autour de la zone de capture (25).

3. Procédé de détection spatiale de la surface d'un objet au moyen de captures d'images stéréo, au moins deux images de l'objet étant créées à partir de directions de capture différentes au moyen d'au moins une caméra couleur qui est orientée sur une zone de capture (25) destinée à l'agencement de l'objet, des emplacements identiques sur la surface de l'objet dans les images étant déterminés comme points de correspondance associés, et la position spatiale de l'emplacement respectif sur la surface étant déterminée à partir de la position des points de correspondance sur les images et de l'angle formé entre les directions de capture des images, en outre
- pendant la capture des images, l'objet étant éclairé dans deux dimensions avec une lumière d'une autre couleur dans la zone de capture (25) à partir de différentes directions d'éclairage à l'aide d'au moins deux moyens d'éclairage (21, 22, 23, 24), une texture de couleur à haute résolution pouvant être obtenue dans le cas d'objets présentant une courbure localement forte, des zones de couleur dans les couleurs des différents moyens d'éclairage ainsi que des couleurs mélangées formées à partir de celle-ci étant formées,
- des points de correspondance associés les uns aux autres étant déterminés au moins à partir de la couleur de l'emplacement respectif de la surface,
- les au moins deux images étant créées au moyen d'au moins une caméra à lignes (20) dont la ligne et/ou les lignes sont orientées transversalement à une direction de balayage (26) de la caméra à lignes (20) et l'éclairage de la zone de capture (25) étant effectué avec différentes couleurs, au moins un moyen d'éclairage (21, 22, 23, 24) étant disposé d'un côté et au moins un deuxième moyen d'éclairage (21, 22, 23, 24) étant disposé du côté opposé d'un plan épipolaire,
- un profil de hauteur étant détecté le long d'une ligne de la surface de l'objet transversalement à la direction de balayage (26) à partir de deux captures de l'au moins une caméra à lignes (20) à partir d'au moins deux directions de capture, et une détection tridimensionnelle de la surface étant effectuée par assemblage de profils de hauteur successifs.
